# EUROPEAN PATENT APPLICATION

(11) **EP 4 700 463 A1**
(43) Date of publication of application: **25.02.2026**
(21) Application number: 23934479.9
(22) Date of filing: 26.04.2023
(51) Int. Cl.: G02F 1/1335

(54) **DIMMING ASSEMBLY AND VEHICLE**

(71) Applicant: Fuyao Glass Industry Group Co., Ltd., Fuqing, Fujian 350300 (CN)
(72) Inventor: ZHENG, Guoxin, Fuqing, Fujian 350300 (CN); LIN, Shou, Fuqing, Fujian 350300 (CN); WANG, Yu, Fuqing, Fujian 350300 (CN); ZHENG, Mingsheng, Fuqing, Fujian 350300 (CN)
(74) Representative: Inchingalo, Simona
(86) International application number: PCT/CN2023/090865
(87) International publication number: WO 2024/221277

(57) **Abstract**

A vehicle and a dimming assembly. The dimming assembly comprises a first substrate layer (10), a dimming functional layer (20) and a polarizing film layer (30), wherein the dimming functional layer (20) is connected to the first substrate layer (10); and the polarizing film layer (30) is connected to the dimming functional layer (20), and the polarizing film layer (30) is made of a transmissive-type polarizing material. The polarizing film layer (30) is made of the transmissive-type polarizing material, and the polarizing film layer (30) and the dimming functional layer (20) are combined with each other, such that when light sequentially passes through the polarizing film layer (30) and the dimming functional layer (20) or sequentially passes through the dimming functional layer (20) and the polarizing film layer (30), the dimming assembly can present a dark-state effect. The thickness of the polarizing film layer (30) is relatively thin, and the material cost is low; and after the polarizing film layer (30) and the dimming functional layer (20) are combined with each other, the thickness of the dimming assembly can be reduced, thereby reducing the cost and also reducing the weight. The content of a dye doped in the dimming functional layer (20) is relatively low, and thus the precipitation of the dye can be prevented.

## Description

### TECHNICAL FIELD

The present invention relates to the technical field of glass for vehicle window, and in particular to a dimming assembly and a vehicle.

### BACKGROUND

Vehicle window is one of the important components of a vehicle. To ensure the driving safety of the vehicle, the glass for vehicle window is required to have safety performance parameters such as high strength and rigidity. Meanwhile, the weight of vehicle windows generally accounts for 3% to 10% of the total weight of the car body. Therefore, reducing the weight of the windows can effectively reduce the overall weight of the car, thereby reducing the fuel consumption of the car.

Glass for vehicle window is usually designed as laminated glass, which includes two or more inorganic glass panels and one or more functional film layers arranged therebetween. Laminated glass has good safety and sound insulation properties, which can be used as front windshield, rear windshield, side window glass, skylight glass, etc. when used in car windows. In the related art, when the functional film layer is set as a dimming functional layer, for example, the dimming functional layer is connected to the two glass substrates through adhesive layers, and the adhesive layers are made of materials with the same light transmittance, non-transitional color materials, and bonding layer materials with different light transmittances.

In order to make the light transmittance of the glass for vehicle window appear in a dark state, a double-layer dye liquid crystal LC dimming film layer is usually used. The dark state effect is achieved through mutual cooperation of double-layer dye liquid crystal LC dimming film layers. However, the glass for vehicle at this time is relatively thick and the cost is high. Of course, a relatively thick single-layer dye liquid crystal LC dimming film layer is also used to achieve the dark state effect of the glass for vehicle window. In other words, a relatively low dark state is achieved by increasing the thickness of the dye liquid crystal LC dimming film layer, and adding more dye liquid crystals or increasing the thickness of the dye liquid crystal, but it is prone to have defects such as dye precipitation, color spots and unevenness.

### SUMMARY

A dimming assembly and a method for preparing the same are provided according to various embodiments of the present invention.

A dimming assembly includes:
a first substrate layer;
a dimming functional layer connected to the first substrate layer; and
a polarizing film layer connected to the dimming functional layer, wherein the polarizing film layer is made of a transmissive polarizing material.

In one embodiment, a visible light transmittance of the dimming functional layer is ≥20%.

In one embodiment, the visible light transmittance of the dimming functional layer is in a range of 25% to 65%.

In one embodiment, a visible light transmittance of the polarizing film layer is ≥20%.

In one embodiment, the visible light transmittance of the polarizing film layer is in a range of 20% to 40%.

In one embodiment, the dimming functional layer includes one of LC, PDLC, GHLC, PNLC, PSLC, and PILC, or a combination thereof.

In one embodiment, an initial liquid crystal arrangement of the dimming functional layer is P-polarized or S-polarized. When the initial liquid crystal arrangement of the dimming functional layer is P-polarized, the polarizing film layer is an S-polarized film. When the initial liquid crystal arrangement of the dimming functional layer is S-polarized, the polarizing film layer is a P-polarized film.

In one embodiment, the dimming assembly further includes a filling layer located in a same layer as the dimming functional layer and arranged along an edge of the dimming functional layer.

In one embodiment, the filling layer and the dimming functional layer have a same thickness.

In one embodiment, the filling layer is made of PVB material, EVA material, SGP material, or TPU material.

In one embodiment, the dimming assembly further includes: a second substrate layer, wherein the first substrate layer and the second substrate layer are connected to opposite sides of the dimming functional layer, respectively; a first adhesive layer connected between the first substrate layer and the dimming functional layer; and a second adhesive layer connected between the second substrate layer and the dimming functional layer. The polarizing film layer is connected between the second substrate layer and the second adhesive layer; or the polarizing film layer is connected to a side of the second substrate layer away from the first substrate layer.

In one embodiment, the dimming assembly further includes a layer connected to the polarizing film layer and selected from the group consisting of a scratch-resistant coating layer and an anti-splash film layer.

In one embodiment, the dimming assembly further includes a first adhesive layer connected between the first substrate layer and the dimming functional layer, and a second adhesive layer connected between the polarizing film layer and the dimming functional layer.

In one embodiment, the dimming assembly further includes a film switch layer connected to any one side of the polarizing film layer.

In one embodiment, the dimming assembly further includes a third adhesive layer located between the film switch layer and the polarizing film layer. The film switch layer is connected to the polarizing film layer via the third adhesive layer.

In one embodiment, the first adhesive layer is made of PVB material, EVA material, TPU material, or SGP material with high UV-shielding ability.

In one embodiment, a UV cutoff wavelength of the first adhesive layer is greater than or equal to 390 nm.

In one embodiment, the first adhesive layer is made of transition PVB material, transition EVA material, transition TPU material, or transition SGP material.

In one embodiment, the first substrate layer is made of glass or PC material.

A vehicle is provided including the aforementioned dimming assembly.

The details of one or more embodiments of the present invention are set forth in the accompanying drawings and the description below. Other features, objects and advantages of the present invention will become apparent from the description, the accompanying drawings, and the claims.

### .BRIEF DESCRIPTION OF THE DRAWINGS

FIG. 1 is a schematic view of a dimming assembly according to one embodiment of the present invention.
FIG. 2 is a schematic view of a dimming assembly according to another embodiment of the present invention.
FIG. 3 is a schematic view of a dimming assembly according to yet another embodiment of the present invention.
FIG. 4 is a schematic view of a dimming assembly according to still another embodiment of the present invention.
FIG. 5 is a schematic view of a dimming assembly according to still yet another embodiment of the present invention.

10, first substrate layer; 20, dimming functional layer; 30, polarizing film layer; 40, filling layer; 50, second substrate layer; 61, first adhesive layer; 62, second adhesive layer; 63, third adhesive layer; 70, film switch layer.

### DETAILED DESCRIPTION

In order to make the above objectives, features and advantages of the present invention more obvious and understandable, specific embodiments of the present invention are described in detail below with reference to the accompanying drawings. In the following description, many specific details are set forth in order to fully understand the present invention. However, the present invention can be implemented in many other ways different from those described herein, and those skilled in the art can make similar improvements without departing from the connotation of the present invention. Therefore, the present invention is not limited by the specific embodiments disclosed below.

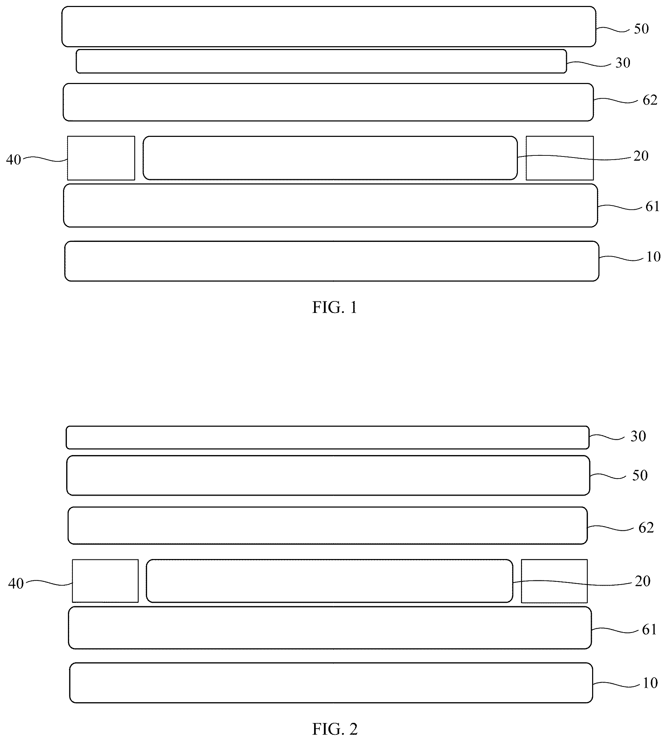

Referring to any one of FIGS. 1 to 5, which respectively show schematic views of dimming assemblies according to various different embodiments of the present invention. A dimming assembly is provided according to one embodiment of the present invention. The dimming assembly includes a first substrate layer 10, a dimming functional layer 20, and a polarizing film layer 30. The dimming functional layer 20 is connected to the first substrate layer 10. The polarizing film layer 30 is connected to the dimming functional layer 20, and the polarizing film layer 30 is made of a transmissive polarizing material.

In the aforementioned dimming assembly, the polarizing film layer 30 is made of a transmissive polarizing material, and the polarizing film layer 30 and the dimming functional layer 20 are combined with each other. It has been found through a large number of experimental studies that when light passes through the polarizing film layer 30 and the dimming functional layer 20 sequentially or passes through the dimming functional layer 20 and the polarizing film layer 30 sequentially, the dimming assembly can present a dark state effect. Compared with the related art where two layers of dimming functional layers 20 are cooperated with each other to achieve a dark state effect, or a thicker dimming functional layer 20 is used to achieve a dark state effect, the thickness of the polarizing film layer 30 of this embodiment is relatively small, and the material cost is low. After being assembled with the dimming functional layer 20, the thickness of the dimming assembly can be reduced, the cost can be reduced, and the weight can be reduced. In addition, the dimming functional layer 20 has a relatively low content of the doped dye, which can avoid precipitation caused by high dye concentration, thereby improving the stability of the dimming assembly.

In one embodiment, a visible light transmittance of the dimming functional layer 20 is ≥20%. In this way, the transmittance of the LC film is adjusted by adjusting the doped dye concentration in the dye-doped liquid crystal formula to obtain different transmittances or by thickening the functional layer material (dye liquid crystal) under the same dye liquid crystal formula. Therefore, low transmittance not only means high cost, but also brings greater technical bottlenecks to subsequent processing and experiments.

Based on the content of doped dye, the thickness of the dimming functional layer 20 and the material cost, the visible light transmittance of the dimming functional layer 20 is specifically set to be in a range of 25% to 65%, such that the content of doped dye is not too high, the dimming functional layer 20 is not too thick, and the material cost can be controlled accordingly to avoid being too high.

Specifically, the visible light transmittance of the dimming functional layer 20 includes but is not limited to 25%, 30%, 35%, 40%, 45%, 50%, 55%, 60%, 65%, etc.

In one embodiment, a visible light transmittance of the polarizing film layer 30 is ≥20%. In this way, the transmittance of the polarizing film layer 30 is adjusted by adjusting the dye concentration during the manufacturing process to obtain different transmittances. Lower transmittance means higher concentration of dye or thicker material. When the transmittance of the polarizing film layer 30 is 20%, when used in combination with the dimming functional layer 20 having a transmittance in dark state of 20%, a relatively low transmittance in dark state can be obtained, such as a transmittance of about 0.5%.

In one embodiment, the visible light transmittance of the polarizing film layer 30 is in a range of 20% to 40%. In this way, when the transmittance of the polarizing film layer 30 is in a range of 20% to 40%, when used in combination with the dimming functional layer 20 with a transmittance in dark state of 20%, a relatively low transmittance in dark state (0% to 1%) can be obtained, such as a transmittance of about 0.5% to 0.8%, which can meet most customers' requirements for low-transmittance dimming products. If a polarizing film layer 30 having a visible light transmittance of 40% is used in combination with a dimming functional layer 20 having a transmittance in dark state of 60%, a relatively high transmittance of dark state (25% to 40%) can be obtained, which can meet the requirements of buildings for dimming products with high light transmittance in dark state.

Specifically, the visible light transmittance of the polarizing film layer 30 includes but is not limited to 20%, 23%, 28%, 30%, 33%, 36%, 40%, etc.

In one embodiment, the dimming functional layer 20 includes one of an LC film, a PDLC film, a GHLC film, a PNLC film, a PSLC film, and a PILC film, or a combination thereof.

In one embodiment, the dimming functional layer 20 includes but is not limited to one of LC (dye liquid crystal) film, PDLC (polymer dispersed liquid crystal) film, GHLC (guest-host liquid crystal) film, PNLC (polymer network liquid crystal) functional element, PSLC (polymer stabilized liquid crystal) film, PILC (pixel isolation liquid crystal) film, etc., or a combination thereof.

In one embodiment, an initial liquid crystal arrangement of the dimming functional layer 20 is P-polarized or S-polarized. When the initial liquid crystal arrangement of the dimming functional layer 20 is P-polarized, the polarizing film layer 30 is an S-polarized film. When the initial liquid crystal arrangement of the dimming functional layer 20 is S-polarized, the polarizing film layer 30 is a P-polarized film. It has been found through a large number of experimental studies that when light passes through the polarizing film layer 30 and the dimming functional layer 20 sequentially or passes through the dimming functional layer 20 and the polarizing film layer 30 sequentially, the dimming assembly can present a dark state effect in this way.

Referring to any one of FIGS. 1 to 5, in one embodiment, the dimming assembly further includes a filling layer 40 located in the same layer as the dimming functional layer 20 and arranged along an edge of the dimming functional layer 20. In this way, the structural flatness and stability can be ensured when the dimming functional layer 20 is assembled with other layers.

In one embodiment, the filling layer 40 and the dimming functional layer 20 have the same thickness. In this way, the structural flatness and stability can be ensured when the dimming functional layer 20 is assembled with other layers.

In one embodiment, the filling layer 40 is made of, but not limited to, PVB material, EVA material, SGP material, or TPU material.

Referring to FIGS. 1 and 2, in one embodiment, the dimming assembly further includes a second substrate layer 50. The first substrate layer 10 and the second substrate layer 50 are connected to two opposite sides of the dimming functional layer 20, respectively. The dimming assembly further includes a first adhesive layer 61 connected between the first substrate layer 10 and the dimming functional layer 20, and a second adhesive layer 62 connected between the second substrate layer 50 and the dimming functional layer 20. The polarizing film layer 30 is connected between the second substrate layer 50 and the second adhesive layer 62 (as shown in FIG. 1) or connected to a side of the second substrate layer 50 away from the first substrate layer 10 (as shown in FIG. 2). In this way, the first substrate layer 10, the first adhesive layer 61, the dimming functional layer 20, the second adhesive layer 62, the second substrate layer 50, and the polarizing film layer 30 are assembled together and firmly connected. In addition, the first substrate layer 10 and the second substrate layer 50 are usually made of rigid materials, such that the dimming assembly is sufficiently rigid and not easily damaged. Furthermore, in order to reduce damage to the dimming functional layer 20 due to squeezing during the assembly process, the dimming functional layer 20 is specifically made of a rigid sheet material, and certainly a flexible or composite sheet material can also be used according to actual needs.

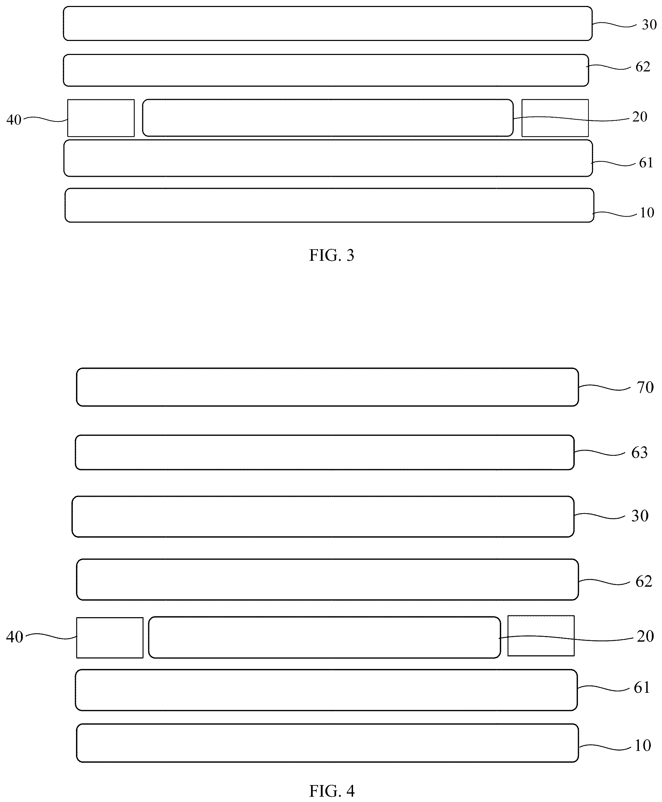

Referring to FIGS. 3 to 5, certainly, as some optional solutions, the second substrate layer 50 can be omitted, that is, only the first substrate layer 10 is used as a carrier. In this way, during the pressing and assembling process of the dimming assembly, the dimming function layer 20 is subjected to a small pressing force that can be basically ignored, such that the dimming functional layer 20 can be made of not only rigid materials, but also flexible materials. The dimming assembly obtained by pressing and assembling the dimming functional layer 20 made of a flexible material has a good appearance, and the occurrence of spots and uneven defects can be avoided or reduced.

Referring to FIGS. 3 to 5, in one embodiment, when the second substrate layer 50 is omitted, the dimming assembly further includes a scratch-resistant coating layer and/or an anti-splash film layer connected to the polarizing film layer 30. In this way, the polarizing film layer 30 is assembled with the scratch-resistant coating layer and/or anti-splash film layer to form a composite functional layer, which can achieve polarization, scratch resistance, anti-splash and other functions, making the product function diversified. In addition, the composite functional layer has greater rigidity than the polarizing film layer 30, which can serve as the second substrate layer 50, and is less prone to damage with a longer service life. Furthermore, by omitting the second substrate layer 50, the thickness of the dimming assembly can be relatively reduced.

In one embodiment, the scratch-resistant coating layer is connected to the polarizing film layer 30 by, but not limited to, spraying, pasting, or other processing methods, and is assembled with the polarizing film layer 30 to form a composite functional layer.

In one embodiment, the anti-splash film layer is attached to the polarizing film layer 30 by, but not limited to, spraying, pasting, or other processing methods, and is assembled with the polarizing film layer 30 to form a composite functional layer.

As some optional solutions, when the second substrate layer 50 is omitted, the thickness of the polarizing film layer 30 is increased, such that the rigidity of the polarizing film layer 30 is increased, and it can serve as the second substrate layer 50, making the dimming assembly less prone to damage and extending its service life.

Referring to FIGS.3 to 5, in one embodiment, the dimming assembly further includes a first adhesive layer 61 connected between the first substrate layer 10 and the dimming functional layer 20, and a second adhesive layer 62 connected between the polarizing film layer 30 and the dimming functional layer 20. In this way, the first substrate layer 10, the first adhesive layer 61, the dimming functional layer 20, the second adhesive layer 62, and the polarizing film layer 30 are assembled together and firmly connected.

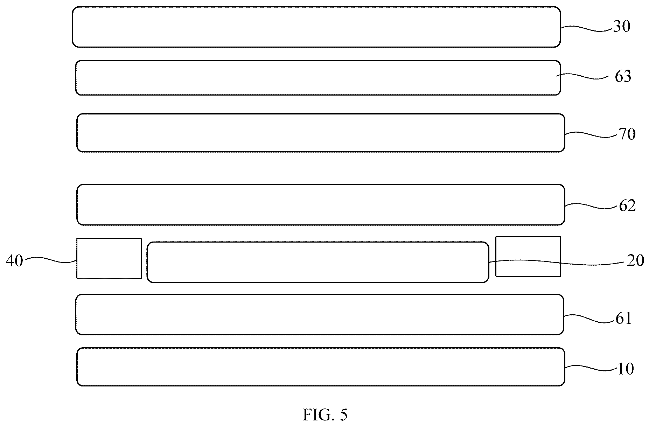

Referring to FIGS. 4 and 5, in one embodiment, the dimming assembly further includes a film switch layer 70. The film switch layer 70 is connected to any side of the polarizing film layer 30. In this way, when the film switch layer 70 is integrated, the appearance of the product will not be affected, and the product performance can be more intelligent.

Optionally, the film switch layer 70 includes but is not limited to a capacitive touch film, which is electrically connected to a dimming controller and controls the dimming controller through a defined touch method. The dimming controller controls the distribution posture of the dye liquid crystal on the dimming functional layer 20, thereby achieving the dimming effect.

Referring to FIGS. 4 and 5, in one embodiment, the dimming assembly further includes a third adhesive layer 63 located between the film switch layer 70 and the polarizing film layer 30. The film switch layer 70 is connected to the polarizing film layer 30 via the third adhesive layer 63. In this way, the film switch layer 70 and the polarizing film layer 30 can be firmly connected via the third adhesive layer 63. When the film switch layer 70 is located on a side of the polarizing film layer 30 facing the dimming functional layer 20, the second adhesive layer 62 is indirectly connected to the polarizing film layer 30, and the film switch layer 70 and the third adhesive layer 63 are both located between the second adhesive layer 62 and the polarizing film layer 30, and the film switch layer 70 is also connected to the second adhesive layer 62.

In one embodiment, the first adhesive layer 61 is made of, but not limited to, PVB material, EVA material, TPU material, or SGP material.

In one embodiment, the first adhesive layer 61 is made of PVB material, EVA material, TPU material, or SGP material with high UV-shielding ability, and the UV cutoff wavelength is greater than or equal to 390 nm. In this way, under the same combination, taking SPD dimming as an example, the UV cutoff wavelength of the first adhesive layer 61 is greater than or equal to 390 nm and the UV cutoff wavelength of conventional PVB is 380 nm. The UV aging results are compared: after aging for about 5000 hours with the UV cutoff wavelength greater than or equal to 390 nm, the transmittance degradation of the SPD film is about 13% less than that of the UV cutoff wavelength of 380 nm.

In one embodiment, the UV cutoff wavelength of the first adhesive layer 61 is 400 nm. In this way, under the same combination, taking SPD dimming as an example, the UV cutoff wavelength of the first adhesive layer 61 is greater than or equal to 390 nm and the UV cutoff wavelength of conventional PVB is 380 nm. The UV aging results are compared: after aging for about 5000 hours with the UV cutoff wavelength of 400 nm, the transmittance degradation of the SPD film is about 15% less than that of the UV cutoff wavelength of 380 nm.

In one embodiment, the first adhesive layer is made of, but not limited to, transition materials such as transition PVB material, transition EVA material, transition TPU material, or transition SGP material. In this way, different lighting effects can be achieved in different areas, for example, gradient lighting.

In one embodiment, the second adhesive layer 62 and the third adhesive layer 63 are made of materials similar to that of the first adhesive layer 61, and will not be repeated here.

In one embodiment, the first substrate layer 10 is made of materials including but not limited to glass and PC materials.

In one embodiment, the second substrate layer 50 is made of materials including but not limited to glass and PC materials.

In addition, when the first substrate layer 10 faces an outside of the vehicle body, that is, the side directly exposed to sunlight, the second substrate layer 50 faces the inside of the vehicle body. Alternatively, when the second substrate layer 50 faces the outside of the vehicle body, that is, the side directly exposed to sunlight, the first substrate layer 10 faces the inside of the vehicle body.

Referring to any one of FIGS. 1 to 5, in one embodiment, the vehicle is provided, which includes but is not limited to a car, a bus, a sedan, a public bus, a coach, a truck, a jeep, a train, a high-speed train, etc. The vehicle includes the dimming assembly according to any of the aforementioned embodiments. The dimming assembly includes but is not limited to the front windshield, side windshield, rear windshield, and skylight glass and the like of the vehicle.

In the aforementioned vehicle, the polarizing film layer 30 is made of a transmissive polarizing material, and the polarizing film layer 30 and the dimming functional layer 20 are combined with each other. It has been found through a large number of experimental studies that when light passes through the polarizing film layer 30 and the dimming functional layer 20 sequentially or passes through the dimming functional layer 20 and the polarizing film layer 30 sequentially, the dimming assembly can present a dark state effect. Compared with the related art where two layers of dimming functional layers 20 are cooperated with each other to achieve a dark state effect, or a thicker dimming functional layer 20 is used to achieve a dark state effect, the thickness of the polarizing film layer 30 in this embodiment is relatively small, and the material cost is low. After being assembled with the dimming functional layer 20, the thickness of the dimming assembly can be reduced, the cost can be reduced, and the weight can be reduced. In addition, the dimming functional layer 20 has a relatively low content of the doped dye, which can avoid dye precipitation.

In the description of the present invention, it should be understood that orientation or position relationships that are indicated by the terms "thickness", "inside", "outside", and the like are orientation or position relationships shown based on the accompany drawings, and are merely for convenience of the description of the present invention and simplifying description, rather than indicating or implying that the indicated device or element must have a particular orientation or being constructed and operated in a particular orientation, and are therefore should not be constructed as limitation of the present invention.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include at least one of the features.

In the present invention, unless otherwise explicitly specified and defined, the terms "coupled", "connected", and "fixed" should be understood in a broad sense. For example, it may be a fixed connection, or a detachable connection, or integrated; it may be a mechanical connection, or an electrical connection; it may be a direct connection, an indirect connection through an intermediate medium, it may be an internal connection between two elements, or an interaction between two elements. For those skilled in the art, the specific meaning of the aforementioned terms in the present invention can be understood according to specific situations.

Each of the technical features of the aforementioned embodiments can be combined arbitrarily. To simplify the description, not all the possible combinations of the technical features in the aforementioned embodiments are described. However, all of the combinations of these technical features should be considered as within the scope of the present invention, as long as such combinations do not contradict with each other.

The aforementioned embodiments merely illustrate several embodiments of the present invention, and the description thereof is specific and detailed, but it shall not be constructed as limiting the scope of the disclosure. It should be noted that a plurality of variations and modifications may be made by those skilled in the art without departing from the conception of the present invention, which are all within the protection scope of the present invention. Therefore, the protection scope of the present invention shall be subject to the appended claims.

## Claims

1. A dimming assembly, comprising:
a first substrate layer;
a dimming functional layer connected to the first substrate layer; and
a polarizing film layer connected to the dimming functional layer, wherein the polarizing film layer is made of a transmissive polarizing material.

2. The dimming assembly according to claim 1, wherein a visible light transmittance of the dimming functional layer is of ≥20%.

3. The dimming assembly according to claim 2, wherein the visible light transmittance of the dimming functional layer is in a range of 25% to 65%.

4. The dimming assembly according to any one of claims 1 to 3, wherein a visible light transmittance of the polarizing film layer is ≥20%.

5. The dimming assembly according to claim 4, wherein the visible light transmittance of the polarizing film layer is in a range of 20% to 40%.

6. The dimming assembly according to any one of claims 1 to 5, wherein the dimming functional layer comprises one of LC, PDLC, GHLC, PNLC, PSLC, and PILC, or a combination thereof.

7. The dimming assembly according to claim 6, wherein an initial liquid crystal arrangement of the dimming functional layer is P-polarized or S-polarized; when the initial liquid crystal arrangement of the dimming functional layer is P-polarized, the polarizing film layer is an S-polarized film; when the initial liquid crystal arrangement of the dimming functional layer is S-polarized, the polarizing film layer is a P-polarized film.

8. The dimming assembly according to any one of claims 1 to 7, further comprising a filling layer located in a same layer as the dimming functional layer and arranged along an edge of the dimming functional layer.

9. The dimming assembly according to claim 8, wherein the filling layer and the dimming functional layer have a same thickness.

10. The dimming assembly according to claim 8 or 9, wherein the filling layer is made of PVB material, EVA material, SGP material, or TPU material.

11. The dimming assembly according to any one of claims 1 to 10, further comprising:
a second substrate layer, wherein the first substrate layer and the second substrate layer are connected to opposite sides of the dimming functional layer, respectively;
a first adhesive layer connected between the first substrate layer and the dimming functional layer; and
a second adhesive layer connected between the second substrate layer and the dimming functional layer;
wherein the polarizing film layer is connected between the second substrate layer and the second adhesive layer; or the polarizing film layer is connected to a side of the second substrate layer away from the first substrate layer.

12. The dimming assembly according to any one of claims 1 to 11, further comprising a layer connected to the polarizing film layer and selected from the group consisting of a scratch-resistant coating layer and an anti-splash film layer.

13. The dimming assembly according to claim 12, further comprising a first adhesive layer connected between the first substrate layer and the dimming functional layer, and a second adhesive layer connected between the polarizing film layer and the dimming functional layer.

14. The dimming assembly according to claim 13, further comprising a film switch layer connected to any one side of the polarizing film layer.

15. The dimming assembly according to claim 14, further comprising a third adhesive layer located between the film switch layer and the polarizing film layer, wherein the film switch layer is connected to the polarizing film layer via the third adhesive layer.

16. The dimming assembly according to any one of claims 11, 13 to 15, wherein the first adhesive layer is made of PVB material, EVA material, TPU material, or SGP material with high UV-shielding ability.

17. The dimming assembly according to claim 16, wherein a UV cutoff wavelength of the first adhesive layer is greater than or equal to 390 nm.

18. The dimming assembly according to claim 16, wherein the first adhesive layer is made of transition PVB material, transition EVA material, transition TPU material, or transition SGP material.

19. The dimming assembly according to any one of claims 1 to 18, wherein the first substrate layer is made of glass or PC material.

20. A vehicle, comprising the dimming assembly according to any one of claims 1 to 19.
